# EUROPÄISCHE PATENTANMELDUNG

(11) **EP 1 405 692 A2**
(43) Veröffentlichungstag der Anmeldung: **07.04.2004**
(21) Anmeldenummer: 03021510.7
(22) Anmeldetag: 24.09.2003
(51) Int. Cl.: B23Q 3/06, B23Q 11/00

(54) **Verfahren und Vorrichtung zum Spannen von dünnwandigen Platten**

(30) Priorität: 27.09.2002 DE 10246082
(71) Anmelder: Portatec GmbH, 01936 Schmorkau (DE)
(72) Erfinder: Metzner, Dieter Dr., 01936 Schmorkau (DE); Spensberger, Andreas, Dr., 01099 Dresden (DE)
(74) Vertreter: Uhlemann, Henry, Dipl. Chem.

(57) **Zusammenfassung**

Die Erfindung betrifft ein Verfahren und eine Vorrichtung zur Paketbearbeitung von Dünnblechen und dünnwandigen, einfach oder doppelt gekrümmten, dreidimensional geformten Platten oder Schalen, insbesondere durch materialabtragende Bearbeitungsverfahren, wie Fräsen oder Bohren. Erfindungsgemäß wird dazu das Werkstückpaket (3) berührungslos durch ein Luftkissen oder ein im wesentlichen laminares Strömungsfeld gespannt, das auf der Oberfläche (11) des zu bearbeitenden Werkstückpakets (3) eine Spannkraft oder Andruckkraft F_{A} erzeugt.

## Beschreibung

Die Erfindung betrifft ein Verfahren und eine Vorrichtung zur Paketbearbeitung von Dünnblechen und dünnwandigen, einfach oder doppelt gekrümmten, dreidimensional geformten Platten oder Schalen, insbesondere durch materialabtragende Bearbeitungsverfahren, wie Fräsen oder Bohren.

Bei der Paketbearbeitung großflächiger, dünnwandiger Bleche oder Formteile durch materialabtragende, insbesondere spanende Verfahren, wie Fräsen, oder spanlose Trennverfahren, wie Laser- oder Wasserstrahlschneiden, werden die einzelnen Bleche oder Formteile des Paketes mit mechanischen Mitteln auf dem Werkzeugmaschinentisch gespannt. Nachteilig daran ist die begrenzte Bearbeitbarkeit des Paketes aufgrund der mechanischen Spannmittel, die mindestens einen Wechsel der Aufspannung notwendig macht.

Ebenso sind Lösungen bekannt, bei denen die einzelnen Elemente des Paketes gegen Verschieben oder Torsion dadurch gesichert werden, dass die Elemente des Paketes durch eine größere Anzahl von Niet- oder Schraubverbindungen fest miteinander verbunden sind. Diese Methode weist den Nachteil auf, dass zusätzliche Aufwendungen für die Vor- und Nachbereitung des Paketes entstehen. Bei konstruktiv hochbeanspruchten Teilen, wie zum Beispiel im Flugzeugbau oder in der Raumfahrtindustrie, besteht zudem die Gefahr, dass durch die für die Niet- oder Schraubverbindungen notwendigen Bohrungen im Paket Anrisse geschaffen werden, die bei späterer Biegewechselbeanspruchung im Einsatz zu einem instabilen Risswachstum und zur Zerstörung der Baugruppe führen können.

Ein weiteres technologisches Problem bei der spanenden Paketbearbeitung dünnwandiger Bleche, insbesondere beim Konturenfräsen mit Schaft- oder Formfräsern geringen Durchmessers, stellt die unzureichende, ungleichmäßige Kühlung des Werkzeugs dar.

In der Regel müssen große Mengen Kühlmittel (Schwallkühlung) eingesetzt werden, die auch für den Abtransport der Späne sorgen.

Aufgabe der Erfindung ist es, ein Verfahren und eine Vorrichtung vorzuschlagen, die die Nachteile des bekannten Standes der Technik eliminieren.

Erfindungsgemäß wird die Aufgabe gelöst, durch ein Verfahren nach Anspruch 1 und eine Vorrichtung nach Anspruch 6.
Vorzugsweise Weiterbildungen des Verfahrens nach Anspruch 1 und der Vorrichtung nach Anspruch 6 sind Gegenstand gesonderter, rückbezogener Unteransprüche.

Zur temporären Lagefixierung der zu einem Paket geschichteten, plattenförmigen oder dreidimensional geformten Bauteilen wird auf der Oberfläche des obersten Paketelementes berührungslos eine Flächenpressung erzeugt, die einen hinreichend großen Anpressdruck des Paketes auf dem Werkzeugmaschinentisch bzw. der Grundfläche der Aufspannung erzeugt. Die Flächenpressung wird bewirkt durch ein Luftkissen, das zwischen dem Bearbeitungswerkzeug oder einer mit ihr verbundenen Baugruppe und der Oberfläche der obersten Lage des zu bearbeitenden Werkstückpaketes erzeugt wird. Das Luftkissen bewirkt den notwendigen Anpressdruck, um eine axiale Verschiebung der Elemente des Paketes in den Hauptrichtungen (x-y-Ebene) oder eine Torsion der Elemente gegeneinander wirksam zu verhindern.

Durch den Wegfall mechanischer Spannelemente, wie Spannpratzen oder direkt auf das Paket wirkende hydraulische Spannelemente sind die Bearbeitungsmöglichkeiten des Paketes nicht eingeschränkt. Da die Ausbildung des Luftkissens unmittelbar zwischen dem beweglich geführten oder stationären Werkzeug und dem darunter starr oder beweglich angeordneten Paket erfolgt, genügen vergleichsweise geringe, durch das Luftkissen erzeugte Druckspannungen, um ein Verschieben oder eine Torsion der Elemente des Paketes zu verhindern.

Durch die werkzeugnahe Ausbildung des Luftkissens wird zudem ein "Auftrieb" der einzelnen Elemente des Paketes in z-Richtung z. B. durch die wirkenden Spanungskräfte, insbesondere beim Bohren oder Fräsen, verhindert. Ein weiterer Vorteil des Luftkissens besteht darin, dass ein Teil des Luftstromes gerichtet für die Kühlung der spanabhebenden Werkzeuge und für den Späneabtransport eingesetzt wird.

Die technologisch optimale Anpresskraft F_{A} kann mit dem Luftdruck, der Druckfläche und der Höhe der den Anpressdruck erzeugenden Gegenkraft F_{G} gesteuert bzw. eingestellt werden.

Die technologisch optimale Spalthöhe h kann ebenfalls mit dem Luftdruck und der dem Anpressdruck erzeugenden Gegenkraft gesteuert bzw. eingestellt werden.

So beträgt bei der Bearbeitung von planen Werkstücken, wie Dünnblechen aus Aluminiumlegierungen, der Spaltabstand zwischen den, den Anpressdruck erzeugenden Bereichen der Werkzeugmaschine und der Oberfläche des Paketes etwa 0,1 mm bis 0,2 mm. Die Anpresskraft beträgt dabei mehrere Hundert Newton bis 1000 Newton oder zum Teil mehr.

Die Fläche des Luftaustrittsbereiches ist planparallel zur Auflagefläche der zu bearbeitenden Werkstücke angeordnet, damit (bei parallelen Werkstücken vorausgesetzt) der Luftspalt über der Werkstoffoberfläche im gesamten Bereich die gleiche Höhe aufweist. Dadurch ist der Anpressdruck um das Werkzeug herum gleichmäßig verteilt und es treten infolge des Luftstromes keine zusätzlichen Querkräfte, die ein Verschieben des Werkstückpaketes bewirken oder zumindest unterstützen, auf.

Bei der Bearbeitung zwei- oder dreidimensional geformter Werkstücke im Paket ist der Luftaustrittsbereich der das Luftkissen erzeugenden Baugruppe der Werkzeugmaschine an die Form bzw. Oberflächenkontur der im Paket zu bearbeitenden Bauteile angepasst.

Bei der Bearbeitung von im wesentlichen planen Teilen, die nur geringe Ebenheitsabweichungen aufweisen, ist es ausreichend, wenn der Luftaustrittsbereich ebenfalls eine im wesentlichen plane Austrittsoberfläche aufweist, da geringfügige Gestaltabweichungen durch die Erhöhung des Luftdruckes kompensiert werden und dennoch ein hinreichend großer Anpressdruck auf der Oberfläche des Paketes erzeugt werden kann.

Vorzugsweise kann der vertikale Abstand (Spalthöhe h) zwischen der/den Luftaustrittsöffnung(en) und der Oberfläche des druckbeaufschlagten Paketes eingestellt werden. In einer weiteren, gleichfalls bevorzugten Ausgestaltung erfolgt die Anpassung der Spalthöhe h adaptiv durch optisch, magnetisch, induktiv oder quasi berührungslos wirkende mechanische Sensoren. Dazu weist in einer weiteren, gleichfalls bevorzugten Ausgestaltung die das Luftkissen erzeugende, werkzeugnahe Baugruppe der Werkzeugmaschine axiale Führungen in Richtung der Werkzeuglängsachse (z-Achse) auf.
Die Luftaustrittsöffnungen der Düsen sind in einer vorteilhaften Ausbildung konzentrisch angeordnet. Dadurch wird eine quasi gleichförmige Druckbeaufschlagung der Oberfläche des Werkstückpaketes bewirkt. Die werkzeugnahe Anordnung des inneren ringförmigen Spaltes bewirkt zudem eine vorteilhafte, gerichtete Verwirbelung des an das Werkzeug herangeführten Kühlmittels.

Die Kühlung des Werkzeugs und der unmittelbar bearbeiteten Bereiche der Werkstücke wird durch die quasi stationären Luftströmungen des Luftkissens unterstützt. Neben der Verschleißminderung des Werkzeugs kann dadurch zielgerichtet einer unerwünschten Gefügeveränderung durch die lokale, temporäre Erwärmung der Bearbeitungszonen der Werkstücke entgegengewirkt werden. Insbesondere bei der aus spanungstechnischer Sicht schwierigen Bearbeitung von duktilen Werkstoffen, wie Aluminium, wird durch den gerichteten Luftstrom eine Kühlung der Späne und damit ein Anschmelzen an das Werkzeug und/oder das Werkstück wirksam verhindert. Zudem führt der gerichtete Luftstrom zum Abtransport der Späne vom Werkzeug. In der Folge wird dadurch die Oberflächenrauhigkeit der bearbeiteten Werkstücke signifikant verbessert.

Die Luftaustrittsöffnungen der Düsen, die das Luftkissen erzeugen, sind so angeordnet und dimensioniert, dass insbesondere beim Überfahren von Kanten, Absätzen, Nuten oder Spalten der Anpressdruck lediglich lokal absinkt, so dass die notwendige Gesamtspannkraft, die ein sicheres Positionieren des Paketes ermöglicht, nicht unterschritten wird.

Der Luftaustritt am äußeren, vorzugsweise ringförmigen, Spalt bewirkt, dass die Oberfläche des zu bearbeitenden Paketes von Verunreinigungen oder Spänen freigehalten wird.

Um das Paket in den Bereichen, die nicht dem Luftkissendruck ausgesetzt sind, besser zusammenzuhalten, werden die einander berührenden Oberflächen der Elemente des zu bearbeitenden Paketes mit einem Fluid benetzt. Die dabei auftretenden Adhäsionskräfte zwischen benachbarten Werkstücken wirken einer Verschiebung oder Torsion des gesamten Paketes und der Elemente untereinander entgegen.

Somit weist die Anordnung zur Erzeugung eines werkzeugnahen Luftkissens folgende Vorteile auf:
- Paketspannung von planen, zwei- oder dreidimensional geformten, dünnwandigen Bauteilen oder Halbzeugen ohne Verwendung mechanischer oder hydraulisch wirkender Spannelemente, die direkt auf oder an dem Paket angreifen (völlige Freizügigkeit bei der Bearbeitung an unterschiedlichen Positionen; kein technologisch zeitaufwendiges Umspannen notwendig; keine Verschiebung der Elemente des Paketes beim Umspannen)
- Kühlung des Bearbeitungswerkzeuges durch die werkzeugnahe Anordnung der Einrichtung zur Erzeugung des Luftkissens
- Minimalmengenkühlschmierung durch die Konzentration der am Werkzeug vorbeiströmenden Sprühnebelmenge und durch die räumliche Nähe der Sprühdüse zum Werkzeug
- Schutz der Minimalmengen-Sprühdüsenanordnung durch Integration der Kühlmittelleitung sowie der Austrittsöffnungen in der Anordnung zur Erzeugung des Luftkissens
- Nutzung des Kühlluftstromes zum Spänabtransport in einen Auffangraum in räumlicher Nähe des Werkzeuges mit Weiterleitung an einen Spanauffangbehälter.

Die Erfindung wird nachfolgend an einem Ausführungsbeispiel näher erläutert anhand von Zeichnungen dargestellt.

Es zeigen:
- Fig. 1: eine Fräsmaschine mit senkrecht angeordneter Arbeitsspindel und einer vertikal verfahrbaren Einrichtung zur Erzeugung eines Luftkissens
- Fig. 2: eine stark vergrößerte Darstellung des Schneidwerkzeuges und der angrenzenden Einrichtung zur Erzeugung des Luftkissens.

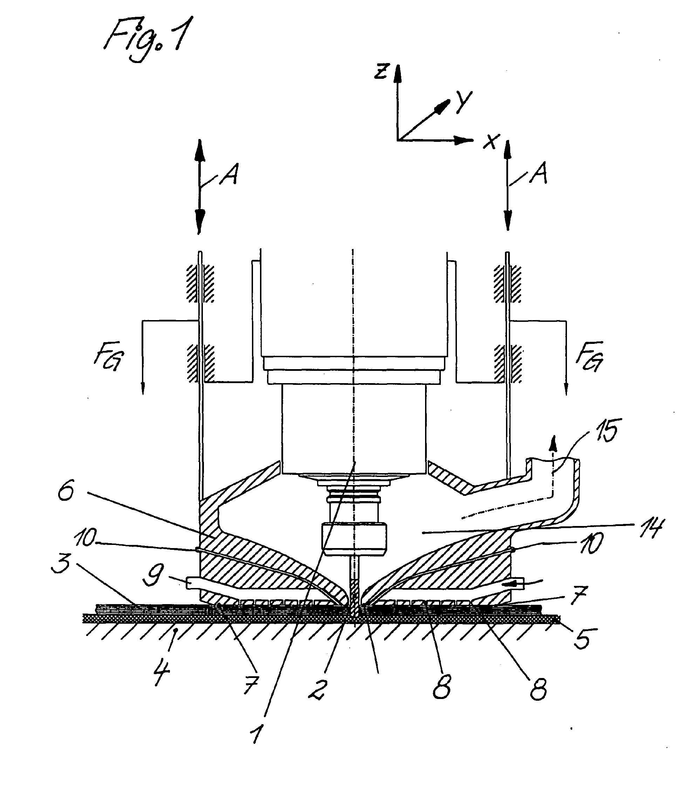

***Figur 1*** zeigt in einer schematisierten, geschnittenen Seitenansicht den stationären Arbeitstisch einer Portalfräsmaschine mit einer, in x-y-z-Richtung verfahrbaren Bearbeitungseinheit. Die Bearbeitungseinheit verfügt über eine Arbeitspindel (1) mit einem eingespannten Schaftfräser/Fingerfräser mit einem Durchmesser von d = 8,0 mm als Werkzeug (2) zur spanenden Bearbeitung eines Werkstückpaketes (3), bestehend aus 6 fluchtend übereinander angeordneten, planen Dünnblechen aus hochfestem Aluminium mit einer Blechdicke s = 1,0 mm. Die Werkstücke werden nach der spanenden Bearbeitung zu Tragflächenteilen eines Passagierflugzeuges gefügt.

Auf dem Werkzeugmaschinentisch (4) befindet sich eine Zwischenplatte (5) aus Kunststoff, die das vollständige Durchtrennen der untersten Lage des Paketes bei der Fräsbearbeitung ohne Beschädigung des Maschinentisches und des Werkzeuges ermöglicht. Die Arbeitsspindel (1) der Bearbeitungseinheit ist umhaust von einem Gehäuse (6) aus Druckguss, das an seiner, dem zu bearbeitenden Werkstückpaket (3) zugewandten Unterseite (7) mehrere, konzentrisch angeordnete Reihen von Düsen (8) aufweist. Die Düsen (8) sind durch einen Druckluftkanal (9) untereinander und mit einer nicht näher dargestellten Drucklufterzeugereinheit verbunden.

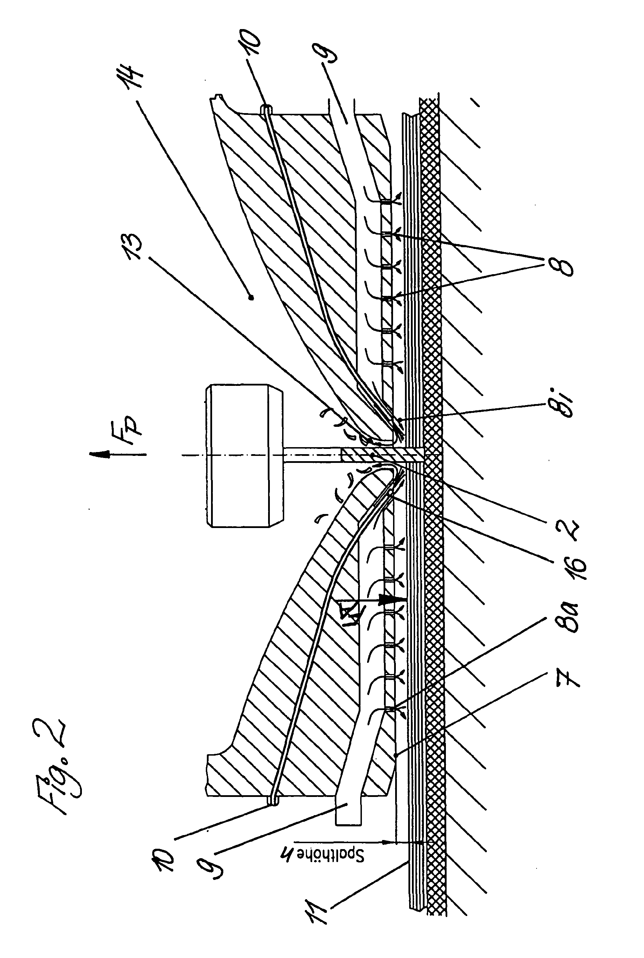

Die aus den Düsen (8) austretende Druckluft bildet zwischen der Oberfläche (11) des zu bearbeitenden Werkstückpaketes (3) und der im Abstand der einstellbaren Spalthöhe (h) darüber befindlichen Unterseite (7) des Gehäuses (6) ein luftkissenartiges Strömungsfeld, das in schematisierter Form in ***Fig. 2*** näher gezeigt wird.

Aus den im wesentlichen senkrecht aus der Unterseite (7) des Gehäuses (6) austretenden Düsen (8) wird durch die Druckluft ein quasi laminares Strömungsfeld aufgebaut, das eine hinreichend große Anpresskraft F_{A} auf dem zu bearbeitenden Werkstückpaket (3) erzeugt.

Die aus den am äußeren Rand der ringförmig angeordneten Düsen (8a) ausströmende Druckluft bewirkt vorteilhaft ein Wegblasen von Verunreinigungen an der Werkstückoberfläche.
Die aus den, im werkzeugnahen Bereich angeordneten Düsen (8i) des inneren Ringes austretende Druckluft dient neben der Übertragung der Andruckkraft F_{A} auf die Oberfläche (11) des zu bearbeitenden Werkstückpakets (3) zugleich der Vernebelung des an das Werkzeug (2) herangeführten Kühlmittels und dem Späneabtransport in Richtung des rotierenden Werkzeugs. Dazu weisen die in Richtung des Werkzeuges (2) ausgerichteten Austrittsöffnungen dieser Düsen (8i) einen Neigungswinkel von etwa 30° bis 60° gegenüber der Oberfläche (11) des zu bearbeitenden Werkstückpaketes (3) auf.

Das Gehäuse (6) weist zwei unabhängig voneinander ansteuerbare Kühlmittelkanäle (10) auf, die unmittelbar neben dem Werkzeug (2) an der Unterseite (7) des Gehäuses münden. Durch die werkzeugnahe Mündung der beiden Kühlmittelkanäle (10) wird eine gleichmäßige Vernebelung des Kühlmittels durch die vorbeiströmende Druckluft des Luftkissens bewirkt.

Durch die ringförmige Anordnung der einzelnen Düsen (8) als konzentrische Kreise an der Unterseite (7) des Gehäuses (6) ist eine gleichförmige Druckausbildung des Luftkissens gewährleistet. Der innerste Düsenring ist vorteilhaft minimal beabstandet vom rotierenden Fräswerkzeug. So kann in diesem werkzeugnahen Bereich eine hinreichend große Anpresskraft F_{A} erzeugt werden, die ein lokales Abheben einzelner Lagen des zu bearbeitenden Werkstückpaketes (3) durch die wirkenden Passivkräfte F_{P} beim Fräsen verhindert.
Durch die Anordnung der inneren Düsen (8i) in unmittelbarer Nähe des Werkzeugs (2) wird zugleich ein sicherer Abtransport der Späne (12) ermöglicht, die durch das Luftkissen vom rotierenden Werkzeug (2) weggeblasen und durch den, als enganliegendem Absaugkanal (13) wirkenden Spalt zwischen Werkzeug (2) und angrenzendem, werkzeugnahen Bereich des Gehäuses (6) weitergeleitet werden. Der Späneabtransport erfolgt dann vom Innenraum (14) des Gehäuses (6) durch Absaugung in eine nicht näher dargestellte Spänesammelstation (15).

Um den vertikalen Abstand (Spalthöhe h) zwischen den düsenförmigen Luftaustrittsöffnungen an der Unterseite (7) des Gehäuses (6) und der benachbarten Oberfläche (11) des druckbeaufschlagten Werkstückpaketes (3) in Abhängigkeit von zu erwartenden Oberflächenabweichungen oder der zu bearbeitenden Werkstück-Lagenzahl einstellen zu können, ist das Gehäuse (6) gegenüber der Arbeitsspindel (1) bzw. der Bearbeitungseinheit in z-Richtung axial verfahrbar. Durch Axialverschiebung (A) des Gehäuses (6) gegenüber der Arbeitsspindel (2) durch die Gegenkraft F_{G} kann somit bei konstantem Druck der aus den Düsen (8) ausströmenden Druckluft die Gesamtspannkraft verändert werden. Alternativ dazu kann eine Änderung der Gesamtspannkraft auch durch Änderung der Druckkraft am Druckerzeuger und gleichzeitige Regelung der Gegenkraft F_{G} erfolgen. So kann auch die Andruckkraft F_{A} bei Beibehaltung der Spalthöhe h verändert werden.

Bei der beispielhaft dargestellten Paketbearbeitung von 6 übereinander liegenden, planen Dünnblechen aus hochfestem Aluminium ist eine mittlere Spalthöhe h von 0,05 mm bis 0,2 mm ausreichend, um Dickentoleranzen des zu bearbeitenden Werkstückpaketes (3) und damit etwaige Abweichungen der Spalthöhe Δh auszugleichen. Je ebener die Oberfläche (11) des zu bearbeitenden Werkstückpaketes (3) und je kleiner der beim Spanen aufgeworfene Grat ist, desto kleiner kann die Spalthöhe h eingestellt werden. Der Vorteil einer minimierten Spalthöhe h besteht im höheren Spaltwiderstand für die durchströmende Druckluft des Luftkissens, der größeren Spannkraft und dem geringeren Luftverbrauch.
Bei einer durch die Gegenkraft F_{G} voreingestellten Andruckkraft muss der Druck der durch die Düsen austretenden Luft so erhöht werden, das die technologisch notwendige Spalthöhe h eingestellt wird. Die Spalthöhe h stellt sich dabei weniger durch die, auf die Oberfläche (11) des zu bearbeitenden Werkstückpaketes (3) auftreffende Strömung sondern vielmehr durch den, unter der Unterseite (7) des Gehäuses (6) entstehenden Überdruck ein.
Bei dem als vorteilhaft ermittelten, mittleren Abstand von etwa 0,1 mm bis 0,2 mm zwischen der Unterseite (7) des planen Gehäuses (6) und der Oberfläche (11) der darunter liegenden, obersten Lage des zu bearbeitenden Werkstückpaketes (3) wurde eine mittlere Andruckkraft F_{A} zwischen 300 N und 1000 N erzeugt. Diese Kräfte sind hinreichend, um die bei der spanenden oder spanlosen Bearbeitung von Werkstückpaketen aus mehrlagigen Dünnblechen eine sichere, temporäre Lagefixierung ohne den Einsatz konventioneller, direkt auf oder am Paket oder deren Elementen angreifender Spannmittel zu ermöglichen.
Die Summe des Querschnittes der einzelnen Düsen (8) ist so gewählt, dass die maximale Strömungsgeschwindigkeit vergleichsweise klein bleibt. Im Verhältnis zur Gesamtquerschnittsfläche aller Düsen (8) des Gehäuses (8) ist die Querschnittsfläche der Düsen, durch die die Druckluft nach innen (Richtung Werkzeug) und außen entweichen kann (äußerer Düsenring), vergleichsweise gering.

### Bezugszeichenliste

- 1: Arbeitsspindel
- 2: Werkzeug
- 3: Werkstückpaket
- 4: Werkzeugmaschinentisch
- 5: Zwischenplatte
- 6: Gehäuse
- 7: Unterseite
- 8: Düsen
- 8i: innere Düsen
- 8a: äußere Düsen
- 9: Druckluftkanal
- 10: Kühlmittelkanal
- 11: Oberfläche
- 12: Späne
- 13: Absaugkanal
- 14: Innenraum
- 15: Spänesammelstation
- 16: Mündung des Kühlmittelkanals

- A: Axialverschiebung des Gehäuses
- F_{G}: Gegenkraft
- F_{A}: Andruckkraft

- h: Spalthöhe
- Δh: Abweichungen der Spalthöhe
- x, y, z: Bezugsachsen im kartesischen Koordinatensystem

## Patentansprüche

1. Verfahren zur Paketbearbeitung von Dünnblechen und dünnwandigen, einfach oder doppelt gekrümmten, dreidimensional geformten Platten oder Schalen, insbesondere durch materialabtragende Bearbeitungsverfahren, bei dem das Werkstückpaket (3) berührungslos durch ein Luftkissen gespannt wird.

2. Verfahren nach Anspruch 1, **dadurch gekennzeichnet, dass** durch das Luftkissen die Ausbildung eines quasi laminaren Strömungsfeldes auf der Oberfläche (11) des zu bearbeitenden Werkstückpakets erfolgt (3), wobei die resultierende Andruckkraft F_{A} im wesentlichen orthogonal auf die Oberfläche (11) des Werkstückpaketes (3) wirkt.

3. Verfahren nach Anspruch 1 oder 2, **dadurch gekennzeichnet, dass** Teilvolumina des Luftkissens oder des Strömungsfeldes zur gerichteten Kühlung des Werkzeugs (2) verwendet werden.

4. Verfahren nach einem der Ansprüche 1 bis 3, **dadurch gekennzeichnet, dass** Teilvolumina des Luftkissens oder des Strömungsfeldes zur Beseitigung von Verunreinigungen auf der Oberfläche (11) des Werkstückpaketes (3) verwendet werden.

5. Verfahren nach einem der Ansprüche 1 bis 4, **dadurch gekennzeichnet, dass** Teilvolumina des Luftkissens oder des Strömungsfeldes zum Späneabtransport verwendet werden.

6. Vorrichtung zur Paketbearbeitung von Dünnblechen und dünnwandigen, einfach oder doppelt gekrümmten, dreidimensional geformten Platten oder Schalen, insbesondere durch materialabtragende Bearbeitungsverfahren, bei dem das Werkstückpaket (3) berührungslos durch ein Luftkissen oder ein im wesentlichen laminares Strömungsfeld gespannt wird, das auf der Oberfläche (11) des zu bearbeitenden Werkstückpakets (3) eine Spannkraft oder Andruckkraft F_{A} erzeugt.

7. Vorrichtung nach Anspruch 6, **dadurch gekennzeichnet, dass** die Spannkraft oder Andruckkraft F_{A} im wesentlichen orthogonal auf die Oberfläche (11) des Werkstückpaketes (3) wirkt.

8. Vorrichtung nach Anspruch 6 oder 7, **dadurch gekennzeichnet, dass** der Luftaustrittsbereich der das Luftkissen oder das laminare Strömungsfeld erzeugenden Baugruppe der Werkzeugmaschine an die Form bzw. Oberflächenkontur der im Paket zu bearbeitenden Bauteile angepasst ist.

9. Vorrichtung nach einem der Ansprüche 6 bis 8, **dadurch gekennzeichnet, dass** die Fläche des Luftaustrittsbereiches planparallel zur Auflagefläche oder Oberfläche (11) der zu bearbeitenden Werkstücke angeordnet ist.

10. Vorrichtung nach Anspruch 6 oder 7, **dadurch gekennzeichnet, dass** der vertikale Abstand (Spalthöhe h) des Luftaustrittsbereiches gegenüber der Oberfläche (11) des zu bearbeitenden Werkstückpaketes (3) einstellbar ist.

11. Vorrichtung nach Anspruch 10, **dadurch gekennzeichnet, dass** die Spalthöhe h durch Sensoren, die mit einer Regelungseinrichtung verbunden sind, an das Oberflächenprofil des zu bearbeitenden Werkstückpaketes (3) kontinuierlich oder zyklisch einstellbar ist.

12. Vorrichtung nach Anspruch 10, **dadurch gekennzeichnet, dass** der Luftaustrittsbereich fest angeordnete oder bewegliche Düsen (8) aufweist.

13. Vorrichtung nach Anspruch 12, **dadurch gekennzeichnet, dass** die einzelnen Düsen (8) eine konzentrische Anordnung bilden, die das Werkzeug (2) umschließen.

14. Vorrichtung nach Anspruch 13, **dadurch gekennzeichnet, dass** der äußere Ring der konzentrisch angeordneten Düsen (8a) so ausgebildet ist, dass durch einen Teilvolumenstrom des Luftkissens Verunreinigungen aus dem Arbeitsbereich der Werkzeugmaschine entfernt werden.

15. Vorrichtung nach Anspruch 13, **dadurch gekennzeichnet, dass** der innere Ring der konzentrisch angeordneten Düsen (8i) so ausgebildet ist, dass durch einen Teilvolumenstrom des Luftkissens abgetragener Werkstoff oder Späne aus dem Arbeitsbereich der Werkzeugmaschine entfernt werden.

16. Vorrichtung nach einem der Ansprüche 6 bis 15, **dadurch gekennzeichnet, dass** die Arbeitsspindel (1) der Bearbeitungseinheit der Werkzeugmaschine von einem Gehäuse (6) umgeben ist, das an seiner, dem zu bearbeitenden Werkstückpaket (3) zugewandten Unterseite (7) mehrere, konzentrisch angeordnete Reihen von Düsen (8) aufweist.

17. Vorrichtung nach einem der Ansprüche 6 bis 16, **dadurch gekennzeichnet, dass** das Gehäuse (6) mindestens einen Kühlmittelkanal (10) aufweist, der werkzeugnah an der Unterseite (7) des Gehäuses (6) mündet.

18. Vorrichtung nach einem der Ansprüche 6 bis 17, **dadurch gekennzeichnet, dass** das Gehäuse (6) einen Durchbruch aufweist, aus dem das Werkzeug (2) auskragt, wobei der Durchbruch an die Form des Werkzeug (2) angepasst ist und der Abstand zwischen Durchbruch und Werkzeug (2) ein Minimum ist.

19. Vorrichtung nach einem der Ansprüche 6 bis 18, **dadurch gekennzeichnet, dass** das Gehäuse (6) gegenüber der Arbeitsspindel (1) bzw. der Bearbeitungseinheit in z-Richtung axial verfahrbar ist.

20. Vorrichtung nach einem der Ansprüche 6 bis 19, **dadurch gekennzeichnet, dass** die Mündung des Kühlmittelkanals (10) so angeordnet ist, das austretende Kühlmittel vom Luftstrom, der aus dem Luftkissen entweicht, zerstäubt und um das Werkzeug (2) verwirbelt wird.

21. Vorrichtung nach einem der Ansprüche 6 bis 20, **dadurch gekennzeichnet, dass** die Mündung des Kühlmittelkanals (10) von einem Druckluftmantel umhüllt ist, der die Kühlmittelzerstäubung verbessert.

22. Vorrichtung nach einem der Ansprüche 6 bis 21, **dadurch gekennzeichnet, dass** die Spalthöhe h durch Regulierung des Luftdruckes oder der Andruckkraft F_{A} einstellbar ist.

23. Vorrichtung nach Anspruch 22, **dadurch gekennzeichnet, dass** die Andruckkraft F_{A} über die einstellbare Gegenkraft F_{G} und/oder den Luftdruck regelbar ist.

24. Vorrichtung nach einem der Ansprüche 6 bis 24, **dadurch gekennzeichnet, dass** die durch das Luftkissen vom rotierenden Werkzeug (2) weggeblasenen Späne durch den, als enganliegendem Absaugkanal (13) wirkenden Spalt zwischen Werkzeug (2) und angrenzendem, werkzeugnahen Bereich des Gehäuses (6) weitergeleitet werden.

25. Vorrichtung nach Anspruch 24, **dadurch gekennzeichnet, dass** die weggeblasenen Späne vom Innenraum (14) des Gehäuses (6) durch eine Absaugeinrichtung in eine Spänesammelstation (15) geleitet werden.

26. Verfahren zur Paketbearbeitung von Dünnblechen und dünnwandigen, einfach oder doppelt gekrümmten, dreidimensional geformten Platten oder Schalen, insbesondere durch materialabtragende Bearbeitungsverfahren, bei dem das Werkstückpaket (3) berührungslos durch ein Luftkissen oder ein quasi laminares Strömungsfeld gespannt wird, wobei die einander berührenden Oberflächen der Elemente (Lagen) des zu bearbeitenden Werkstückpaketes (3) vor dem Spannen mit einem Fluid benetzt werden.
